# DEMANDE DE BREVET EUROPEEN

(11) **EP 0 888 720 A1**
(43) Date de publication de la demande: **07.01.1999**
(21) Numéro de dépôt: 97201966.5
(22) Date de dépôt: 02.07.1997
(51) Int. Cl.: A23P 1/00, A23P 1/12, A23G 9/28, A23L 1/212, A23L 1/217, A23L 1/325, A23L 1/0526

(54) **Procédé et dispositif de fabrication d'anneaux de matière alimentaire**

(71) Demandeur: SOCIETE DES PRODUITS NESTLE S.A., 1800 Vevey (CH)
(72) Inventeur: Daouse, Alain, F-60430 Noailles (FR); Delande, Bruno, F-60690 Marseille en Beauvaisis (FR); Stab, Gérald,, F-60180 Nogent sur Oise (FR)
(74) Mandataire: Wavre, Claude-Alain

(57) **Abrégé**

Procédé et dispositif de fabrication d'anneaux de matière alimentaire dans lesquels on extrude une masse de matière alimentaire au travers d'une filière présentant un orifice de sortie de section annulaire et l'on découpe des anneaux du boudin tubulaire ainsi obtenu, la masse de matière alimentaire comprenant soit une base de viande, poisson et/ou légumes sous forme subdivisée et un agent liant, soit une crème glacée ou un sorbet.

## Description

La présente invention a pour objet un procédé et un dispositif de fabrication d'anneaux de matière alimentaire.

On connaît divers procédés et dispositifs de fabrication d'anneaux de matière alimentaire.

C'est ainsi qu'EP0697176 (SOREAL S.A.) décrit l'extrusiongélification d'un boudin tubulaire destiné à être débité en tronçons ou en tranches, le boudin comprenant un broyat de produit alimentaire, un gélifiant tel qu'un alginate et de l'eau, et le boudin étant reçu en sortie de filière d'extrusion dans un bain contenant des ions calcium libres qui assurent sa prise en gel.

US5578337 (Thota et al.) décrit la gélification d'une masse fluide, notamment d'une masse d'oignons hâchés fluide contenant un alginate, par mise en contact de la masse avec une solution contenant des ions calcium libres dans une chambre de gélification précédant une filière d'extrusion, puis l'extrusion du gel au travers de la filère, notamment en forme de tube, et le découpage en tranche du gel extrudé, notamment en forme d'anneaux d'oignons.

EP0234012 (PESCANOVA S.A.) décrit la fabrication d'anneaux de calamar reconstitués, par compresion à froid d'une chair de calamar hâchée dans un moule annulaire.

GB1511228 (UNILEVER) décrit la fabrication d'anneaux de calamar reconstitués par compactage et formage, notamment par moulage, extrusion ou découpe de blocs congelés de chair de calamar finement hâchée et compactée.

EP0373246 (FRISCO-FINDUS) décrit un appareil de formage en continu de confiserie glacée comprenant notamment deux cylindres d'extrusion parallèles alimentés alternativement par un boisseau rotatif, une extrémité aval de chaque cylindre définissant un orifice de sortie circulaire, un diaphragme de découpe étant prévu à hauteur de chacun des deux orifices de sortie circulaires, et les diaphragmes s'ouvrant et se refermant alternativement sur les orifices de sortie en synchronisme avec le boisseau.

La présente invention a pour but de proposer un procédé et un dispositif de fabrication d'anneaux de matière alimentaire à une cadence élevée et soutenue.

A cet effet, le procédé de fabrication d'anneaux de matière alimentaire selon la présente invention, dans lequel on extrude une masse de matière alimentaire au travers d'une filière présentant un orifice de sortie de section annulaire et l'on découpe des anneaux du boudin tubulaire ainsi obtenu, est remarquable par le fait que la masse de matière alimentaire comprend soit une base de viande, poisson et/ou légumes sous forme subdivisée et un agent liant, soit une crème glacée ou un sorbet.

Le dispositif selon la présente invention comprend deux cylindres d'extrusion parallèles alimentés alternativement par un boisseau rotatif, chaque cylindre renfermant une canne coaxiale, une extrémité aval de chaque canne et une extrémité aval de chaque cylindre délimitant entre elles une filière d'extrusion à orifice de sortie annulaire, un diaphragme de découpe étant prévu à hauteur de chaque orifice de sortie annulaire, et les diaphragmes s'ouvrant et se refermant alternativement sur les orifices de sortie annulaires en synchronisme avec le boisseau.

Pour mettre en oeuvre une première forme de réalisation du procédé selon la présente invention, on peut préparer la masse de matière alimentaire à extruder en hâchant et/ou broyant de la viande, du poisson et/ou des légumes et en incorporant à cette base un agent liant, par exemple.

On peut en particulier préparer la base de viande, poisson et/ou légumes sous forme subdivisée en concassant des composants surgelés et en les mélangeant à d'autres composants déshydratés, le mélange ayant la forme d'une pâte fluide et pouvant présenter une température inférieure à 0°C, notamment une température de -10°C à -2°C, de préférence une température de -5°C à -3°C, par exemple.

De préférence, on extrude la masse à froid, notamment à une température comprise entre environ -10°C et la température ambiante, par exemple, le froid permettant une extrusion particulièrement précise et une découpe nette et franche des anneaux.

De préférence, le choix de l'agent liant est fait de manière que la masse puisse être extrudée à froid, que la masse présente une cohésion qui permette de la découper après extrusion sans qu'elle se désagrège, et que les anneaux présentent une texture correcte en bouche.

On choisit donc de préférence l'agent liant parmi les agents qui exercent un effet liant à froid. On peut le choisir notamment dans un groupe comprenant les flocons de pomme de terre, la farine de blé précuite et/ou la farine de guar, cette dernière convenant particulièrement bien, par exemple.

On peut recommander d'utiliser les flocons de pomme de terre à raison de 8-14%, la farine de blé précuite à raison de 2-4% et/ou la farine de guar à raison de 0,5-2,5% en poids de l'anneau prêt à la consommation, par exemple.

On peut prévoir également, après l'extrusion et le découpage, un traitement ultérieur à la chaleur qui permette de développer l'effet liant exercé par la coagulation de protéines et/ou la gélatinisation d'amidons, par exemple.

Des agents dont l'effet liant peut être ainsi développé ultérieurement à chaud peuvent être choisis dans un groupe comprenant les protéines de poisson, les protéines de soya, l'amidon de maïs natif, le blanc d'oeuf en poudre et/ou un gel protéique, par exemple.

Les anneaux de matière alimentaire ainsi fabriqués dans cette première forme de réalisation du procédé, par extrusion de cette masse de matière alimentaire, comprenant une base de viande, poisson et/ou légumes sous forme subdivisée et un agent liant, au travers d'une filière présentant un orifice de sortie de section annulaire et découpage du boudin tubulaire ainsi obtenu, peuvent être conditionnés, conservés et/ou consommés tels quels ou, le cas échéant, après friture et/ou surgélation, par exemple.

On peut en particulier enrober les anneaux extrudésdécoupés avec une composition d'enrobage, notamment un mélange d'eau et de farine de blé, et/ou les panner, les préfrire et les surgeler, par exemple.

Pour mettre en oeuvre une deuxième forme de réalisation du procédé selon la présente invention, on peut préparer la masse de matière alimentaire à extruder sous forme d'une crème glacée foisonnée jusqu'à environ 100% en volume ou d'un sorbet, par exemple.

On peut ajouter à cette masse de crème glacée ou de sorbet des morceaux et/ou fragments de produits aromatiques et/ou décoratifs tels que des fruits confits, des fruits secs ou du chocolat, par exemple.

On peut extruder cette masse de crème glacée ou de sorbet à une température inférieure à 0°C, notamment à une température de -20°C à -2°C, de préférence à une température d'environ -17°C à -5°C, par exemple.

Les anneaux de crème glacée ou de sorbet ainsi fabriqués dans cette deuxième forme de réalisation du procédé, par extrusion de cette masse au travers d'une filière présentant un orifice de sortie de section annulaire et découpage du boudin tubulaire ainsi obtenu, peuvent être conditionnés, conservés et/ou consommés tels quels ou, le cas échéant, après avoir été enrobés avec une composition d'enrobage.

Une composition d'enrobage idoine pour des anneaux de crème glacée peut être une couverture grasse telle qu'une couverture de chocolat ou une couverture aromatisée aux fruits, par exemple.

Une composition d'enrobage idoine pour des anneaux de sorbet peut être une solution aqueuse telle qu'un sirop, par exemple.

Une composition d'enrobage pour crème glacée ou sorbet peut contenir des particules ou granulés d'une matière aromatique telle qu'une caséine extrudée ou un sucre cristallisé, par exemple.

Le dispositif pour la mise en oeuvre du procédé selon la présente invention comprend donc deux cylindres d'extrusion parallèles alimentés alternativement par un boisseau rotatif, chaque cylindre renfermant une canne coaxiale, une extrémité aval de chaque canne et une extrémité aval de chaque cylindre délimitant entre elles une filière d'extrusion à orifice de sortie annulaire, un diaphragme de découpe étant prévu à hauteur de chaque orifice de sortie annulaire, et les diaphragmes s'ouvrant et se refermant alternativement sur les orifices de sortie annulaires en synchronisme avec le boisseau.

La réalisation du boisseau rotatif, de l'alimentation alternative de chaque cylindre et de l'actionnement des diaphragmes en synchronisme avec le boisseau peut se faire de la manière décrite dans EP0373246 cité ci-dessus dont le contenu est incorporé à la présente demande par référence, par exemple.

Le boisseau lui-même peut être alimenté en masse à extruder par l'intermédiaire d'un poussoir, par exemple.

Dans une forme de réalisation préférée du dispositif, les cannes sont creuses et leurs extrémités aval présentent chacune des conduits radiaux de pulvérisation d'un fluide dans la filière, notamment d'eau sous pression et/ou d'air comprimé, au niveau de son orifice de sortie annulaire.

Dans une variante particulièrement performante de cette forme de réalisation préférée du dispositif, les extrémités aval des cannes présentent en outre chacune une gorge circulaire au fond de laquelle débouchent les conduits radiaux et dans laquelle le diaphragme s'engage en position fermée.

De manière surprenante, un tel dispositif permet de maintenir et de soutenir des cadences de production élevées, notamment des cadences d'environ 250-400 anneaux par min, tout en assurant des écarts de poids minima entre anneaux d'une même production, les boudins tubulaires étant découpés de manière parfaitement définie sur toute l'épaisseur de leur paroi et un encrassement éventuel des orifices de sortie de la filière étant prévenu de manière particulièrement efficace.

La cadence de production, autrement dit la fréquence d'ouverture et fermeture des diaphragmes peut être avantageusement commandée par l'intermédiaire d'un motovariateur.

Le dispositif pour la mise en oeuvre du procédé selon la présente invention est décrit ci-après en référence au dessin annexé, dans lequel:
La figure 1 est une vue en coupe verticale d'une forme de réalisation préférée du dispositif,
la figure 2 est un agrandissement d'une filière du dispositif illustré à la figure 1 montrant le diaphragme de découpe en position ouverte, et
la figure 3 est un agrandissement d'une filière du dispositif illustré à la figure 1 montrant le diaphragme de découpe en position fermée.

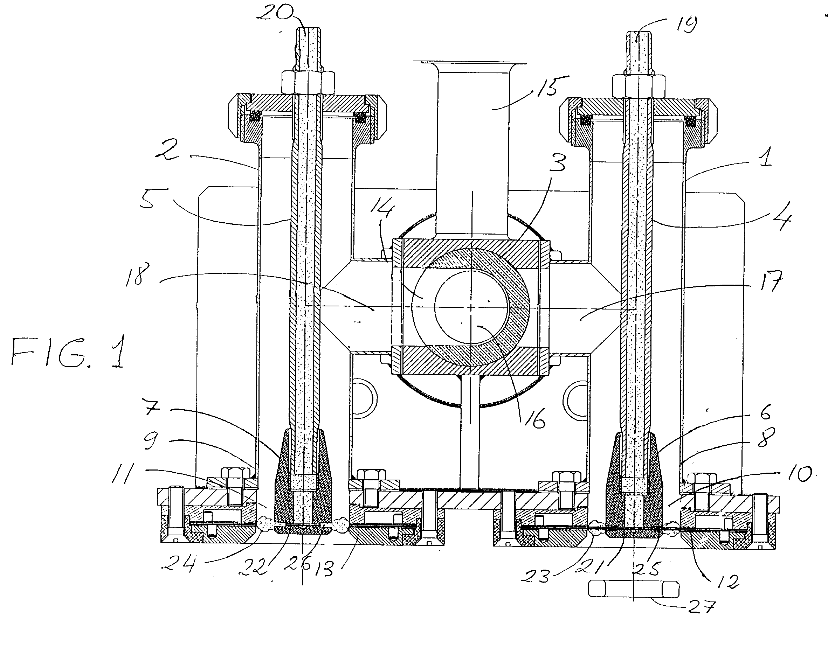

Dans la forme d'exécution représentée à la figure 1, le dispositif comprend deux cylindres d'extrusion (1,2) parallèles verticaux alimentés alternativement par un boisseau rotatif (3). Chaque cylindre renferme une canne coaxiale (4,5). Une extrémité aval de chaque canne (6,7) et une extrémité aval de chaque cylindre (8,9) délimitent entre elles une filière d'extrusion à orifice de sortie annulaire (10,11). Un diaphragme de découpe (12,13) est prévu à hauteur de chaque orifice de sortie annulaire et les diaphragmes s'ouvrent (13) et se referment (12) alternativement sur les orifices de sortie annulaires (11,10) en synchronisme avec le boisseau (3,14).

Le boisseau (3) peut être alimenté par l'intermédiaire d'un poussoir (non représenté) destiné à pousser la masse a extruder dans une conduite d'alimentation (15). La conduite d'alimentation (15) communique avec l'intérieur (16) du boisseau par l'intermédiaire de deux ouvertures d'entrées diamétralement opposées (non représentées) prévues dans une partie postérieure de la paroi cylindrique du boisseau. Une ouverture de sortie (14) est prévue dans une partie antérieure de la paroi cylindrique du boisseau (3), à angle droit des ouvertures d'entrée. A chaque demi-tour du boisseau (3) entraîné en rotation par un moteur (non représenté), l'une des deux ouvertures d'entrée du boisseau communique avec la conduite d'alimentation (15) et l'ouverture de sortie (14) du boisseau communique alternativement avec l'une puis avec l'autre de deux conduites d'entrée (17,18) des deux cylindres d'extrusion (1,2).

Les cannes (4,5) sont creuses et sont reliées chacune par une extrémité amont (19,20) ouverte à des moyens d'alimentation (non représentés) en fluide, notamment en eau sous pression et/ou en air comprimé.

Les extrémités aval (6,7) des cannes présentent chacune des conduits radiaux (21,22) de pulvérisation du fluide (23,24) dans la filière au niveau de son orifice de sortie annulaire (10,11).

Les extrémités aval (6,7) des cannes présentent également chacune une gorge circulaire (25,26) au fond de laquelle débouchent les conduits radiaux (21,22) et dans laquelle le diaphragme (11,12) s'engage en position fermée (12).

L'objet (27) représenté au-dessous de la filière d'extrusion de droite est un anneau tel qu'il vient d'être découpé par le diaphragme (12).

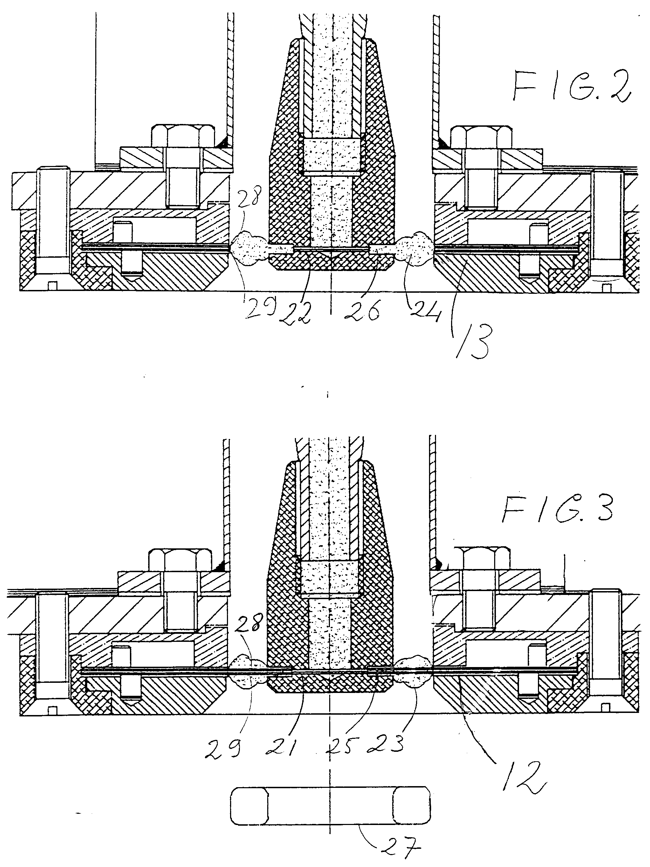

Les figures 2 et 3 sont donc des agrandissements des filières gauche et droite du dispositif illustré à la figure 1 montrant le diaphragme de découpe en position ouverte (13) et en position fermée (12).

Les diaphragmes comprennent, de manière connue de l'homme du métier, plusieurs lames, par exemple huit lames planes incurvées fixées de manière pivotable les unes sur les autres (28,29) et formant un anneau plan dont l'ouverture est commandée ou actionnée en synchronisme avec le boisseau, par l'intermédiaire d'une tringlerie (non représentée), par le moteur même qui entraîne le boisseau.

Les exemples ci-après sont présentés à titre d'illustration du procédé selon la présente invention. Les pourcentages et parties y sont donnés en poids.

### Exemple 1

A l'aide d'un dispositif tel qu'illustré au dessin, on fabrique des anneaux à base de purée de pomme de terre qui présentent après enrobage, panage et préfriture la composition finale suivante, en %:

| | |
|---|---|
| Flocons de pomme de terre | 11,8 |
| Chapelure | 13,1 |
| Oignons | 6,9 |
| Jambon fumé | 8,8 |
| Fromage Emmenthal | 6,9 |
| Huile de tournesol | 4,5 |
| Farine de blé | 2,6 |
| Farine de blé précuite | 2,9 |
| Lait écrémé en poudre | 2,4 |
| Protéines de lait | 2,4 |
| Sel et épices diverses | 1,3 |
| Eau | 36,4 |

Pour préparer la masse de matière alimentaire à extruder, on reconstitue une purée de pomme de terre en mélangeant les flocons, l'eau et le lait écrémé en poudre. On hâche les oignons, le jambon fumé et l'Emmenthal et on les ajoute à la purée. On ajoute le reste des ingrédients exceptés quelques pourcents d'eau et la farine de blé utilisés pour préparer une composition d'enrobage, la chapelure, et l'huile qui est absorbée au cours de la préfriture.

On introduit la masse à température ambiante dans le dispositif à l'aide d'un poussoir. On extrude et découpe les anneaux à une cadence de 250-400 pièces par min tout en pulvérisant un mélange d'eau et d'air comprimé dans les filères. On fabrique ainsi les anneaux avec une précision et une reproductibilité qui ne varient pas et qui permettent de maintenir des écarts de poids minima entre anneaux durant plusieurs heures.

On égoutte les anneaux ainsi fabriqués, on les enrobe avec la composition d'enrobage et on les panne. On les préfrit et on les surgèle.

On peut les apprêter pour la consommation en les passant à la grande friture à 180°C durant 1 min, en les faisant revenir à la poële 2 min de chaque côté ou en les chauffant 12 min à 200-225°C au four préchauffé 10 min à cette température.

Ces anneaux parmentier jambon fromage présentent une forme régulière et une texture croquante.

### Exemple 2

De manière semblable à celle décrite à l'exemple 1 on fabrique des anneaux à base de purée de pomme de terre qui présentent après enrobage, panage et préfriture la composition finale suivante, en %:

| | |
|---|---|
| Flocons de pomme de terre | 9,6 |
| Chapelure | 11,4 |
| Chair de poisson blanc | 25,0 |
| Huile de tournesol | 4,8 |
| Farine de blé | 2,7 |
| Farine de blé précuite | 2,4 |
| Lait écrémé en poudre | 2,1 |
| Protéines de lait | 2,0 |
| Sel et épices diverses | 1,1 |
| Eau | 38,9 |

On peut apprêter les anneaux parmentier de poisson ainsi fabriqués de la manière décrite à l'exemple 1. Ils présentent une forme régulière et une texture croquante.

### Exemple 3

A l'aide d'un dispositif tel qu'illustré au dessin, on fabrique des anneaux de chair de calamar qui présentent après enrobage et préfriture la composition finale suivante, en %:

| | |
|---|---|
| Chair de calamar | 63,0 |
| Farine de blé | 8,3 |
| Farine de guar | 2,1 |
| Blanc d'oeuf en poudre | 2,1 |
| Amidon de maïs modifié | 1,8 |
| Huile de tournesol | 5,9 |
| Agent de levage | 0,7 |
| Amidon de pomme de terre | 3,9 |
| Sel et épices diverses | 1,3 |
| Eau | 10,6 |

Pour préparer une base de chair de calamar sous forme subdivisée, on concasse des blocs de chair de calamar congelée et on les hâche. Cette base a la forme d'une pâte fluide et présente une température de -5°C à -3°C.

Pour préparer la masse à extruder, on incorpore à cette base le reste des ingrédients exceptés la farine de blé, l'eau et l'huile.

On introduit la masse à température inférieure à 0°C dans le dispositif à l'aide d'un poussoir. Tout en pulvérisant un mélange d'eau et d'air comprimé dans les filères, on extrude et découpe les anneaux à une cadence de 300 pièces par min avec une précision et une reproductibilité qui permettent de maintenir des écarts de poids minima entre anneaux durant plusieurs heures.

On égoutte les anneaux ainsi fabriqués et on les enrobe avec une composition d'enrobage préparée en mélangeant l'eau et la farine de blé. On les préfrit à 180°C durant 20-40 s et on les surgèle à -30°C.

On peut les apprêter pour la consommation en les passant à la grande friture à 180°C durant 2 min ou en les faisant revenir dans quelques cuillers d'huile à la poële 2 min de chaque côté.

Ces anneaux de calamars reconstitués frits présentent une forme régulière et une texture croquante comparable à celle d'anneaux de calamars frits entiers.

### Exemple 4

A l'aide d'un dispositif tel qu'illustré au dessin, on fabrique des anneaux de chair de poisson qui présentent après enrobage, panage et préfriture la composition finale suivante, en %:

| | |
|---|---|
| Chair de poisson blanc | 60,1 |
| Chapelure | 13,3 |
| Farine de blé | 5,3 |
| Farine de guar | 2,0 |
| Blanc d'oeuf en poudre | 2,0 |
| Huile de tournesol | 6,7 |
| Amidon de pomme de terre | 2,0 |
| Sel et épices diverses | 1,1 |
| Eau | 7,5 |

Pour préparer une base de chair de poisson sous forme subdivisée, on concasse des blocs de chair de poisson blanc congelée et on les hâche. Cette base a la forme d'une pâte fluide et présente une température de -5°C à -3°C.

Pour préparer la masse à extruder, on incorpore à cette base le reste des ingrédients exceptés la farine de blé, l'eau, la chapelure et l'huile.

On introduit la masse à température inférieure à 0°C dans le dispositif à l'aide d'un poussoir. Tout en pulvérisant un mélange d'eau et d'air comprimé dans les filères, on extrude et découpe les anneaux à une cadence de 450 pièces par min.

On égoutte les anneaux ainsi fabriqués et on les enrobe avec une composition d'enrobage apprêtée en mélangeant la farine de blé et l'eau.

On les panne, on les préfrit à 180°C durant 20-40 s et on les surgèle à -30°C.

On peut les apprêter pour la consommation en les passant à la grande friture à 180°C durant 2 min, en les faisant revenir dans quelques cuillers d'huile à la poële 2 min de chaque côté ou en les chauffant 12 min à 200-225°C au four préchauffé 10 min à cette température.

Ces anneaux de poisson blanc reconstitué frits présentent une forme régulière et une texture croquante.

### Exemple 5

A l'aide d'un dispositif tel qu'illustré au dessin, on fabrique des anneaux à base de chair de poisson qui présentent après panage, enrobage et préfriture la composition finale suivante, en %:

| | |
|---|---|
| Chair de Colin noir | 36,2 |
| Chapelure toastée | 12,5 |
| Farine de blé | 2,5 |
| Farine de guar | 0,8 |
| Chapelure jaune | 1,0 |
| Huile de tournesol | 21,2 |
| Flocons de pomme de terre | 6,3 |
| Amidon de pomme de terre | 0,87 |
| Aïl en poudre | 0,6 |
| Aïl sur sel | 0,5 |
| Sel et épices diverses | 1,1 |
| Eau | 16,0 |

Pour préparer une base de chair de poisson sous forme subdivisée, on concasse des blocs de chair de Colin noir congelée et on les hâche.

Pour préparer la masse à extruder, on incorpore à cette base le reste des ingrédients exceptés la farine de blé, quelques pourcents d'eau, les chapelures et l'huile.

On introduit la masse à froid dans le dispositif à l'aide d'un poussoir. Tout en pulvérisant un mélange d'eau et d'air comprimé dans les filères, on extrude et découpe les anneaux à une cadence de 300 pièces par min.

On égoutte les anneaux ainsi fabriqués, on les enrobe, on les panne, on les préfrit à 180°C durant 20-40 s et on les surgèle à -30°C.

On peut les apprêter pour la consommation en les passant à la grande friture à 180°C durant 2 min, par exemple.

Ces anneaux de poisson ail et huile du type brandade de morue présentent une forme régulière et une texture agréable.

### Exemple 6

A l'aide d'un dispositif tel qu'illustré au dessin, on fabrique des anneaux d'oignons qui présentent après enrobage, panage et préfriture la composition finale suivante, en %:

| | |
|---|---|
| Oignons | 59,9 |
| Chapelure toastée | 11,1 |
| Huile de tournesol | 11,1 |
| Farine de blé | 2,2 |
| Farine de guar | 2,2 |
| Sirop de glucose | 2,2 |
| Sel et épices diverses | 1,3 |
| Eau | 3,1 |

Pour préparer une base d'oignon sous forme subdivisée, on concasse des blocs d'oignon congelé et on les hâche. Cette base a la forme d'une pâte fluide et présente une température de -5°C à -3°C.

Pour préparer la masse à extruder, on incorpore à cette base le reste des ingrédients exceptés la farine de blé, l'eau, la chapelure et l'huile.

On introduit la masse à température inférieure à 0°C dans le dispositif à l'aide d'un poussoir. On extrude et découpe les anneaux à une cadence de 250 pièces par min tout en pulvérisant un mélange d'eau et d'air comprimé dans les filières. On fabrique ainsi les anneaux avec une précision et une reproductibilité remarquables eu égard au fait que cette masse à base d'oignons est relativement molle et collante.

On égoutte les anneaux ainsi fabriqués, on les enrobe, on les panne, on les préfrit et on les surgèle.

On peut les apprêter pour la consommation en les passant à la grande friture, en les faisant revenir à la poële ou en les chauffant au four.

Ces anneaux d'oignons présentent une forme régulière et une texture agréable.

## Revendications

1. Procédé de fabrication d'anneaux de matière alimentaire, dans lequel on extrude une masse de matière alimentaire au travers d'une filière présentant un orifice de sortie de section annulaire et l'on découpe des anneaux du boudin tubulaire ainsi obtenu, caractérisé par le fait que la masse de matière alimentaire comprend une base de viande, poisson et/ou légumes sous forme subdivisée et un agent liant.

2. Procédé de fabrication d'anneaux de matière alimentaire, dans lequel on extrude une masse de matière alimentaire au travers d'une filère présentant un orifice de sortie de section annulaire et l'on découpe des anneaux du boudin tubulaire ainsi obtenu, caractérisé par le fait que la matière alimentaire comprend une crème glacée ou un sorbet.

3. Procédé selon la revendication 1, dans lequel on extrude la matière alimentaire à froid et l'agent liant est choisi dans un groupe comprenant les flocons de pomme de terre, la farine de blé précuite et/ou la farine de guar.

4. Procédé selon la revendication 1, dans lequel on prépare la matière alimentaire sous forme subdivisée en concassant des composants surgelés et en les mélangeant à d'autres composants déshydratés, le mélange ayant la forme d'une pâte fluide et présentant une température de -5°C à -3°C.

5. Procédé selon la revendication 1, dans lequel on enrobe les anneaux extrudés/découpés avec une composition d'enrobage, on les préfrit et on les surgèle.

6. Dispositif pour la mise en oeuvre du procédé selon l'une des revendications 1-5, comprenant deux cylindres d'extrusion parallèles alimentés alternativement par un boisseau rotatif, chaque cylindre renfermant une canne coaxiale, une extrémité aval de chaque canne et une extrémité aval de chaque cylindre délimitant entre elles une filière d'extrusion à orifice de sortie annulaire, un diaphragme de découpe étant prévu à hauteur de chaque orifice de sortie annulaire, et les diaphragmes s'ouvrant et se refermant alternativement sur les orifices de sortie annulaires en synchronisme avec le boisseau.

7. Dispositif selon la revendication 6, dans lequel les cannes sont creuses et leurs extrémités aval présentent chacune des conduits radiaux de pulvérisation d'un fluide dans la filière au niveau de son orifice de sortie annulaire.

8. Dispositif selon la revendication 6, dans lequel les extrémités aval des cannes présentent chacune une gorge circulaire au fond de laquelle débouchent les conduits radiaux et dans laquelle le diaphragme s'engage en position fermée.

9. Dispositif selon la revendication 6, dans lequel la fréquence d'ouverture et fermeture des diaphragmes est commandée par l'intermédiaire d'un moto-variateur.
